Europäisches Patentamt

European Patent Office

Office européen des brevets

(19)

(11) Publication number: **0 224 285 B1**

# EUROPEAN PATENT SPECIFICATION

(12)

(45) Date of publication of patent specification: **08.05.91**   (51) Int. Cl.⁵: **G01V 1/40**

(21) Application number: **86201852.0**

(22) Date of filing: **23.10.86**

(54) **Acoustic logging device.**

(30) Priority: **22.11.85 GB 8528821**

(43) Date of publication of application:
**03.06.87 Bulletin  87/23**

(45) Publication of the grant of the patent:
**08.05.91 Bulletin  91/19**

(84) Designated Contracting States:
**DE FR GB NL**

(56) References cited:
**EP-A- 0 138 271**
**FR-A- 1 169 871**
**FR-A- 2 564 599**
**GB-A- 2 154 320**
**US-A- 4 130 816**

(73) Proprietor: **SHELL INTERNATIONALE RE-**
**SEARCH MAATSCHAPPIJ B.V.**
**Carel van Bylandtlaan 30**
**NL-2596 HR Den Haag(NL)**

(72) Inventor: **Lehr, Bernd Christian**
**Volmerlaan 6**
**NL-2288 GD Rijswijk(NL)**
Inventor: **Broekhuizen, Willem**
**Volmerlaan 6**
**NL-2288 GD Rijswijk(NL)**

(74) Representative: **Aalbers, Onno et al**
**P.O. Box 302**
**NL-2501 CH The Hague(NL)**

## Description

The invention relates to a logging device for detecting acoustic waves travelling through a fluid inside a borehole penetrating subsurface earth formations.

Acoustic logging devices are commonly used to identify at a downhole location characteristics of the acoustic field emanating from a regular or irregular sound source. The characteristics of the acoustic field thus obtained may be used to determine for example the propagation velocity of sound in the formation surrounding the borehole, the presence of layers or fractures in the formation which reflect acoustic waves, or, if the acoustic source is remote from the borehole in which the logging device is suspended, the location of the sound source relative to the logging device.

Various types of acoustic transducers are used in these logging devices such as hydrophones, which basically measure the scalar magnitude of pressure waves caused by the acoustic waves and accelerometers which measure one or more vector components of the vibrations of the borehole fluid induced by acoustic waves.

A common problem encountered with acoustic logging tools is that only in a limited frequency range acoustic decoupling can be obtained between the acoustic transducer and the tool body carrying the transducer.

It is known, for example from European patent application EP-A- 0138271 to provide an acoustic homing-in tool with a series of accelerometers that are embedded in bodies of visco-elastic material. These bodies are mounted on arms that can be pivoted towards the boreholewall so that the accelerometers in the operative position thereof are held closely to or against the boreholewall. Although the known arrangement of the accelerometers provides satisfactory acoustic decoupling between the accelerometers and the tool body this arrangement suffered from certain disadvantages. For example, acoustic dampening provided by the visco-elastic material appeared to decrease in response to an increase of the hydrostatic pressure of the boreholefluid surrounding the tool. In particular in deep boreholes filled with weighted drilling muds the decrease of acoustic dampening hampered the accuracy of the measurement of characteristics of the acoustic field considerably.

A primary object of the present invention is to provide an acoustic logging tool of which the accelerometers are attached to the tool body in such a manner that vibrations of the tool body have only minor impact on the measurements by the accelerometers.

A further object of the invention is to provide an acoustic logging tool of which the measurement of characteristics of an acoustic field by means of accelerometers attached to the tool is more accurate than that of the known acoustic logging tools and moreover independent of the depth of the tool in a borehole.

In accordance with the invention these objects are accomplished by a logging tool comprising a support and an acoustic sensor including at least one accelerometer suspended from the support on at least one string of flexible material, wherein the support is provided with means for obtaining a predetermined distance between the acoustic sensor and the borehole wall.

The invention may be carried into practice in a number of ways but one specific embodiment will now be described by way of example with reference to the accompanying drawings, in which:

Fig. 1. is a side view of an acoustic logging device embodying the invention.

Fig. 2. shows at an enlarged scale the encirculated portion of Fig. 1.

Fig. 3. shows a polar plot of acoustic intensity distribution in the borehole fluid of a testhole measured with the logging tool of the invention.

Fig. 4 shows a polar plot of acoustic intensity distribution measured under similar conditions with a prior art logging tool.

Fig. 5A shows a polar plot of particle displacement amplitudes in the fluid near the borehole wall measured during a test with the logging tool of the invention, and

Fig. 5B shows a polar plot of calculated borehole particle displacement amplitudes in the fluid near the borehole wall.

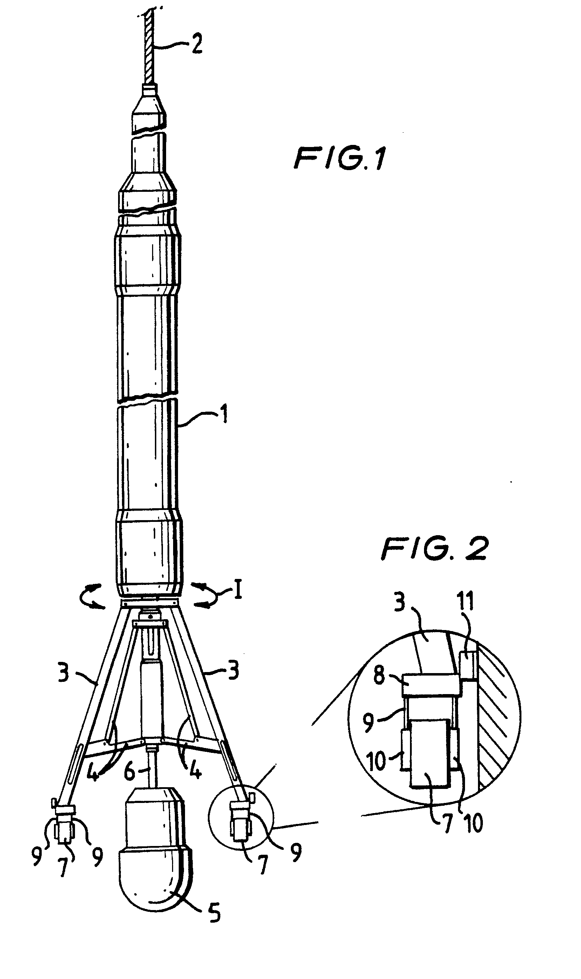

In Figure 1, there is shown the lower section of an acoustic logging device comprising an oblong tool body 1 suspended from a conventional wireline 2. The tool body 1 carries near the lower end thereof an assembly of arms 3 that can be pivoted simultaneously towards and from the wall of a borehole (not shown) in which the logging device, when in operation, is suspended.

Pivoting of the arms 3 is induced by a conventional actuator mechanism 4.

The arms 3 and the actuator mechanism 4 are together with a protective tool nose 5 mounted on a common shaft 6 that can be rotated (see arrows I) relative to the upper section of the tool body 1. Each arm 3 carries at the lower end thereof an acoustic sensor 7 comprising one or more accelerometers (not shown).

As illustrated in detail in Fig. 2 each acoustic sensor 7 is suspended from a terminal member 8 of an arm 3 by means of a pair of substantially parallel flexible strings 9. Each string 9 is fixed at the upper end thereof to the terminal member 8 and at the lower end thereof to a connector stud 10 forming part of the acoustic sensor. The flexible strings 9 may consist of metal springs, strings of an elastomeric material, like rubber, or of any other suitable flexible material.

The main objective of the suspension of the acoustic sensor 7 at the strings 9 is to suspend the sensor inside the borehole fluid at a location remote from the arms 3 so that the acoustic sensor is able to follow in an accurate manner oscillations of particles of the borehole fluid surrounding the sensor due to acoustic waves travelling therethrough while the motions of the sensor are independent from vibrations of the tool body 1 and the arms 3 either in response to acoustic waves or due to movement of the logging device through the borehole while log measurements are taken. To further optimize the sensitivity of the acoustic sensor the density of the sensor is matched to the density of the borehole liquid. Since the density of usually applied borehole liquids, or drilling muds, lies between 1000 and 3000 $kg/m^3$ the density of the sensor is selected within this range as well. If desired the sensor may be provided with adjustable buoyancy or weight means (not shown) so that the density of the sensor can be matched to the densities of borehole fluids of different composition.

To ensure a constant sensor to borehole wall spacing each arm 3 is provided with a spacer element 11. The thickness of the blocks is selected such that when the blocks are clamped to the borehole wall said spacing is between 0 and 2 cm.

It is observed that instead of mounting the arms 3 carrying the sensor 7 near the lower end of the tool body 1 as illustrated in Fig. 1 the arms may be mounted at other locations as well. Furthermore the tool may be provided with only a single arm carrying one or more acoustic sensors. If desired, the acoustic sensor or sensors may be suspended inside the borehole fluid by means of various tensioned flexible strings oriented in opposite or various different directions.

FIELD TEST

To assess the impact of the suspended arrangement of acoustic sensors on measurements taken by a homing-in device operating as described in Applicant's European patent application No. 84201436.7 (publication No. 0138271) a field test was carried out. The device was equipped with three pivotable arms. Two of these arms were provided with suspended sensors consisting of tri-axial accelerometers as shown in Figures 1 and 2. For comparison the third arm of the device was equipped with a tri-axial accelerometer embedded in a mass of visco-elastic material.

The field test was carried out in a test hole traversing a chalk formation in the region of Beek (the Netherlands). During the tests the device was lowered at various depths inside the borehole while the acoustic sensors measured characteristics of sound waves emanating from a sound source located in a nearby second borehole. The spacing between the two boreholes was about 20 m while the sound source was arranged at a depth of 142.3 in the target well and emanated random acoustic noise with a centre frequency of 2000 Hz.

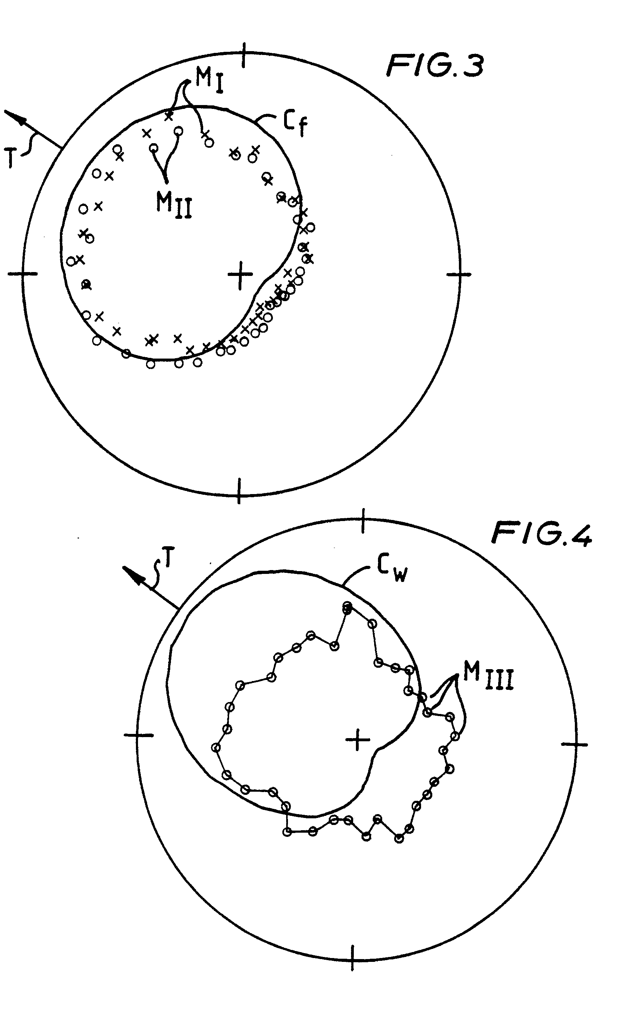

Both boreholes were filled with water. On the basis of known formula's for transmission of acoustic waves through subsurface earth formations a calculation was made of the theoretically occurring particle displacement at the boreholewall/boreholefluid interface of the testhole in response to the acoustic field generated by the sound source. A polar plot $C_f$ of the thus calculated theoretical acoustic intensity distribution in the fluid near the borehole wall of the test hole is shown in figure 3. Figure 4 shows a polar plot $C_w$ of the calculated acoustic intensity distribution in the earth formation near the borehole wall.

In figures 3 and 4 arrow T represents the direction of the second borehole.

Fig. 3 further shows results of measurements $M_I$ and $M_{II}$ obtained with the suspended accelerometers while the tool was located in the test hole at a depth of 145.7 m, and Fig. 4 shows the results of similar measurements $M_{III}$ obtained with the conventional wall clamped accelerometer. As can be seen in these figures the energy distribution measured in the fluid by the suspended accelerometers shows less scatter and better agreement with theory than that obtained with the wall clamped accelerometer. Similar results were obtained at four other depth positions, indicating the much higher reproducability and reliability of measurements carried out with the suspended accelerometers. Only at one location did the distributions from both sensor types disagree with the expected pattern and fail to indicate the proper target direction.

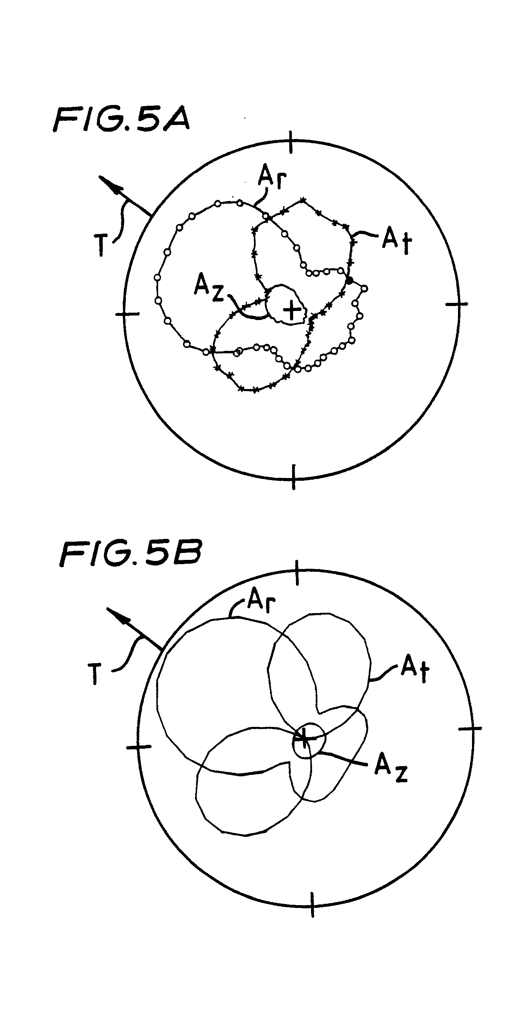

The vector components in radial, tangential and axial direction $A_r$, $A_t$ and $A_z$ measured by the three axes of the suspended acoustic sensor are plotted in Fig. 5A. Excellent agreement was found with the corresponding calculated distributions (Fig. 5B). It should be noted, however, that this comparison is only qualitatively valid since root-mean-square values of random noise in the frequency band 1500-2500 Hz were measured, whereas Fig. 5B shows amplitudes calculated for an indicent compressional (sine) wave of 2000 Hz, the centre frequency of the spectrum applied during the experiments. Shear waves were not taken into account. Furthermore, the calculated curve holds for the solid/fluid interface whereas the suspended accelerometers were actually placed one centimetre away from that interface.

The test results prove the applicability of passive acoustic direction determination in a borehole. The results further indicate that reliability and accuracy are substantialy improved by suspending the accelerometers in the fluid near the borehole wall rather than by clamping them against the formation. This is also an operational simplification since the device is no longer required to have wall-clamped sensors, hence the device can be operated more safely and even when moving at a low logging speed rather than in a stationary position.

## Claims

1. Acoustic logging device for measuring particle motion related to acoustic waves travelling through a borehole fluid, the device comprising a support and an acoustic sensor (7), including at least one accelerometer, suspended from the support on at least one string of flexible material (9), said support further being provided with means (11) for obtaining a predetermined distance between the acoustic sensor and the borehole wall.

2. The logging device of claim 1, wherein the mass density of the acoustic sensor is between 1000 and 3000 kg/m³.

3. The logging device of claims 1 or 2, wherein the acoustic sensor comprises a tri-axial accelerometer.

4. The logging device of any one of claims 1-3, wherein the string of flexible material consists of a helical metal spring.

5. The logging device of any one of claims 1-3, wherein the string of flexible material consists of an elastomeric material.

6. The logging device of any one of claims 1-5, wherein the accelerometer is suspended from the support by means of a plurality of substantially parallel strings of flexible material.

7. The logging device of any one of claims 1-6, wherein the support consists of a wireline supported tool body provided with a plurality of arms which can be pivoted simultaneously with the lower ends thereof towards and from the borehole wall, each arm carrying at the lower end thereof an acoustic sensor.

8. The logging device of claim 7, wherein each acoustic sensor is mounted near the lower end of each arm in such a manner that when the arm is clamped against the borehole wall upon pivoting the arm towards the borehole wall, the distance from the acoustic sensor to the borehole wall is less than 2 cm.

9. The logging device of anyone of claims 1-8, wherein the device is a homing-in tool for determining the position of a well adjacent to the borehole, in which the tool is suspended, on the basis of acoustic waves emanating from an acoustic source inside said adjacent well.

## Revendications

1. Dispositif de diagraphie acoustique pour mesurer le mouvement de particules en relation avec des ondes acoustiques se déplaçant à travers un fluide dans un trou de sonde, le dispositif comprenant un support et un détecteur acoustique (7), comprenant au moins un accéléromètre, suspendu au support par au moins un lien de matière flexible (9), le support étant pourvu en outre de moyens (11) pour maintenir une distance prédéterminée entre le détecteur acoustique et la paroi du trou de sonde.

2. Dispositif de diagraphie selon la revendication 1, dans lequel la masse volumique du détecteur acoustique est comprise entre 1000 et 3000 kg/m³.

3. Dispositif de diagraphie selon la revendication 1 ou 2, dans lequel le détecteur acoustique comprend un accéléromètre tri-axial.

4. Dispositif de diagraphie selon l'une quelconque des revendications 1-3, dans lequel le lien en matière flexible consiste en un ressort métallique hélicoïdal.

5. Dispositif de diagraphie selon l'une quelconque des revendications 1-3, dans lequel le lien en matière flexible consiste en une matière élastomère.

6. Dispositif de diagraphie selon l'une quelconque des revendications 1-5, dans lequel l'accéléromètre est suspendu au support au moyen de plusieurs liens en matière flexible substantiellement parallèles.

7. Dispositif de diagraphie selon l'une quelconque des revendications 1-6, dans lequel le support consiste en un corps d'outil supporté par un câble métallique avec une multiplicité de bras que l'on peut faire pivoter simultanément de façon que leurs extrémités inférieures se rapprochent et s'écartent de la paroi du trou de sonde, chaque bras portant à son extrémité inférieure un détecteur acoustique.

8. Dispositif de diagraphie selon la revendication 7, dans lequel chaque détecteur acoustique est monté près de l'extrémité inférieure de chaque bras de manière que quand le bras est serré contre la paroi du trou de sonde lors du pivotement du bras vers la paroi du trou de sonde, la distance entre le détecteur acoustique et la paroi du trou de sonde soit inférieure à 2 cm.

9. Dispositif de diagraphie selon l'une quelconque des revendications 1-8, dans lequel le dispositif est un outil chercheur pour déterminer la position d'un puits adjacent au trou de sonde, dans lequel l'outil est suspendu, sur la base d'ondes acoustiques provenant d'une source acoustique située à l'intérieur du puits adjacent.

## Ansprüche

1. Akustisches Bohrloch-Meßgerät zur Messung von Partikelbewegungen, die auf sich durch eine Bohrlochflüssigkeit bewegende Schallwellen zurückgehen, mit einer Abstützung und einem Schallsensor (7), der zumindest einen Beschleunigungsmesser umfaßt, der an der Abstützung mit zumindest einem Strang aus flexiblem Material (9) aufgehängt ist und wobei die Abstützung mit einem Abstandshalter (11) versehen ist, um einen vorbestimmten Abstand zwischen dem Schallsensor und der Bohrlochwand zu gewährleisten.

2. Bohrloch-Meßgerät nach Anspruch 1, bei dem die Massendichte des Schallsensors zwischen 1000 und 3000 kg/m$^3$ liegt.

3. Bohrloch-Meßgerät nach Anspruch 1 oder 2, bei dem der Schallsensor einen dreiachsigen Beschleunigungsmesser umfaßt.

4. Bohrloch-Meßgerät nach einem der Ansprüche 1 bis 3, bei dem der Strang flexiblen Materials aus einer Metallschraubenfeder besteht.

5. Bohrloch-Meßgerät nach einem der Ansprüche 1 bis 3, bei dem der Strang flexiblen Materials aus einem Elastomermaterial besteht.

6. Bohrloch-Meßgerät nach einem der Ansprüche 1 bis 5, bei dem der Beschleunigungsmesser an der Abstützung mittels einer Vielzahl von im wesentlichen parallelen Strängen flexiblen Materials aufgehängt ist.

7. Bohrloch-Meßgerät nach einem der Ansprüche 1 bis 6, bei dem die Abstützung aus einem an einem Kabel befestigten Gehäuse eines Bohrlochwerkzeuges besteht, das mit einer Vielzahl von Armen versehen ist, deren untere Enden gemeinsam zur und von der Bohrlochwand geschwenkt werden können und wobei jeder Arm an seinem unteren Ende einen Schallsensor trägt.

8. Bohrloch-Meßgerät nach Anspruch 7, bei dem jeder Schallsensor nahe dem unteren Ende eines jeden Arms in solcher Weise befestigt ist, daß, wenn der Arm durch Schwenken in Richtung auf die Bohrlochwand mit dieser verspannt wird, der Abstand des Schallsensors zur Bohrlochwand weniger als 2 cm beträgt.

9. Bohrloch-Meßgerät nach einem der Ansprüche 1 bis 8, wobei das Gerät ein Zielgerät zur Positionsbestimmung einer dem Bohrloch, in dem das Gerät aufgehängt ist, benachbarten Bohrung ist, und zwar auf der Basis von Schallwellen, die von einer Schallquelle innerhalb der benachbarten Bohrung ausgehen.

*FIG.1*

*FIG. 2*

FIG.3

FIG.4

## FIG.5A

## FIG.5B